# EUROPÄISCHE PATENTANMELDUNG

(11) **EP 1 106 303 A2**
(43) Veröffentlichungstag der Anmeldung: **13.06.2001**
(21) Anmeldenummer: 00126175.9
(22) Anmeldetag: 30.11.2000
(51) Int. Cl.: B23Q 1/52, B23Q 37/00, B23Q 1/26, B23Q 3/18, B23Q 5/04

(54) **Werkzeugmaschine mit konzentrich zur Maschinenhauptachse gelagerten Dreh-Lagerbock und Dreh-Schwenkkopf für eine Hilfsspindel**

(30) Priorität: 30.11.1999 DE 19957659
(71) Anmelder: Hiltner Sonderteilebau, 92369 Sengenthal (DE)
(72) Erfinder: Hiltner, Anton, 92369 Sengenthal (DE)
(74) Vertreter: Dreykorn-Lindner, Werner, Dipl.-Ing.

(57) **Zusammenfassung**

1. Werkzeugmaschine mit konzentrisch zur Maschinenhauptachse gelagerten Dreh-Lagerbock und Dreh-Schwenkkopf für eine Hilfsspindel.
2.1 Bei bekannten 4-Achsgesteuerten Fräsmaschinen führt die Verschwenkbarkeit in der Regel zu einer Verlängerung in Richtung der Maschinenhauptachse, insbesondere der Hauptspindel. Dadurch entstehen Nachteile hinsichtlich Steifigkeit, Kühlung und Klemmung.
2.2 Um mit einer Werkzeugmaschine die Bearbeitung komplexer Werkstücke wie bei einer 5-achsgesteuerten Werkzeugmaschine durchführen zu können, sind erfindungsgemäß konzentrisch zur Maschinenhauptachse am Hauptspindelstock ein Dreh-Lagerbock und an diesem ein Dreh-Schwenkkopf für eine Hilfsspindel mit separatem Antrieb derart befestigt, dass deren Spindelachse um die Maschinenhauptachse dreh- und verschwenkbar gelagert ist, wodurch die Werkzeugmaschine eine fünfachsige Steuerung ermöglicht..
2.3 Die Erfindung liegt auf dem Gebiet der Werkzeugmaschinen.

Zur Veröffentlichung wird FIG. 4 vorgeschlagen.

## Beschreibung

Die Erfindung betrifft in erster Linie eine Werkzeugmaschine, bestehend aus einem Gestell, einem Hauptantrieb und einem Vorschubantrieb für eine Hauptspindel, welche in einem Spindelstock gelagert ist, einem Maschinentisch zum Aufspannen des Werkstücks sowie einem Schlitten zur Verstellung des Maschinentisches, und einem mit der Hauptspindel gleichachsigen Drehlager, welches eine im Winkel zur Achse des Drehlagers verstellbare Hilfsspindel trägt (Oberbegriff des Patentanspruchs 1).

Um auch komplexe Formen von Werkstücken bearbeiten zu können, ist es bekannt, einen Schwenkmechanismus vorzusehen. Beispielsweise ist aus der DE 34 32 371 C2 ein Werkzeugspannkopf für Werkzeugmaschinen bekannt, der um eine einzige Achse in unterschiedliche Arbeitspositionen schwenkbar ist und eine einzige Werkzeugaufnahme für ein rotierend antreibbar gelagertes oder für ein feststehendes Werkzeug, welches direkt oder mit Hilfe eines Werkzeughalters in den Werkzeugspannkopf einsetzbar ist, aufweist. Das Werkzeug oder der Werkzeughalter weist ein antreibbares Zahnrad oder ein ausrückbares Antriebsglied zum Ankuppeln eines rotierend antreibbaren Werkzeuges an das Getriebeausgangsglied eines im Werkzeugspannkopf vorgesehenen Kegelradgetriebes auf und die Drehachse des rotierend antreibbaren Werkzeuges ist parallel zur Maschinenhauptachse Z oder zur Planachse X ausgerichtet. Im einzelnen ist vorgesehen, dass für rotierend antreibbare und für feststehende Werkzeuge ein und derselbe Werkzeugspannkopf vorgesehen ist, dessen Schwenkachse gegenüber der Maschinenhauptachse Z und der Planachse X um 45° geneigt angeordnet ist.

Eine Fräseinheit zum Fräsen von Schlitzen in Werkstücke aus Vollmaterial ist aus der DE 35 22 971 C2 bekannt, welche einen an einer Grundplatte gelagerten Fräsmotor aufweist, dessen Frässpindel einen Fingerfräser trägt und der mit der Kolbenstange eines druckmittelbetätigten Vorschubzylinders über einen Lenker verbunden ist. Der Vorschubzylinder ist an der Grundplatte verschwenkbar gelagert. Im einzelnen ist vorgesehen, dass der Fräsmotor an der Grundplatte längsverschiebbar und schwenkbar geführt ist und dass der Lenker über seine Lagerung am Fräsmotor hinaus zu einem an der Grundplatte schwenkbar und querverschiebbar gelagerten zweiarmigen Lenkerhebel verlängert ist. Ein im oder nahe am Anlenkpunkt des Lenkerhebels an der Kolbenstange des Vorschubzylinders angebrachter Führungszapfen ist in einer in der Grundplatte angeordneten Führungsnut geführt, die einen gewellten, im wesentlichen in Längsrichtung der Fräseinheit gerichteten Verlauf aufweist.

Auch aus dem DE 92 06 030 U1 ist eine Fräsmaschine mit einem Fräskopf und mindestens einer in einem Hauptspindelgehäuse gelagerten Hauptspindel bekannt, die zwischen einer vertikalen Arbeitsposition und einer horizontalen Arbeitsposition verschwenkbar ist. Im einzelnen ist vorgesehen, dass das Hauptspindelgehäuse mit der Hauptspindel innerhalb des Maschinenrahmens fliegend gelagert und um eine das Hauptspindelgehäuse schneidenden Horizontalachse um mindestens 90° schwenkbar ist, wobei die Hauptspindel in jeder Arbeitsposition an eine Antriebswelle anschließbar ist.

Weiterhin ist aus der DE 40 31 381 C1 eine Fixiervorrichtung für den Schwenkkopf einer Universal-Fräsmaschine bekannt, der auf einer vorderen schrägen Stirnwand des Spindelgehäuses um 180° motorisch verdrehbar gelagert und mittels eines zur 45° -Drehachse konzentrischen Hohlzylinderansatzes in einem an der Stirnwand befestigten Außenring geführt ist. Durch motorisch betätigte Arretierelemente ist der Schwenkkopf in der Arbeitsposition und in der Abstellposition der am Schwenkkopf stirnseitig montierten Vertikalspindel genau arretierbar. Im einzelnen ist vorgesehen, dass im Spindelgehäuse ein gabelförmiger Klemmschieber motorisch verschiebbar angeordnet ist, der an seinen spreizbaren Schenkeln innenseitig schräge Auflaufflächen aufweist, die einen zum freien Schieberende hin sich keilförmig vergrößernden Zwischenraum begrenzen. In dem gehäusefesten Außenring ist eine Ausnehmung zur formschlüssigen Aufnahme der Schenkel des Klemmschiebers vorgesehen. Am Hohlzylinderansatz des Schwenkkopfes ist mindestens ein Klemmstein angeordnet, der zur Erzielung einer Keilwirkung zu den Auflaufflächen des Klemmschiebers korrespondierende schräge Keilflächen aufweist.

Aus dem DE 94 18 723 U1 ist eine Werkzeugmaschine bekannt, bei der die dem Werkstück zugewandte Seite des Spindelkasten gebildet ist von einem um eine auf den Maschinentisch gerichteten Achse verdrehbaren Drehtisch, der mit einer außerhalb der Drehachse "Z" des Drehtisches angeordneten Spindel versehen ist. Bei einer weiteren Ausführungsform der Werkzeugmaschine ist eine zweite Spindel im Drehzentrum des Drehtisches vorgesehen, deren Drehachse auf das Werkstück gerichtet ist. Diese zentrische Spindel, die als niedertourig laufende Spindel ausgebildet ist, erlaubt eine übliche Grobbearbeitung durch Schruppen. Die folgende Feinbearbeitung übernimmt die exzentrisch angeordnete erste Spindel, die als hochtourige Spindel mit entsprechenden Schlichtwerkzeugen versehen ist. Als Antriebe für die radiale Verlagerung und/oder das Verschwenken der exzentrischen Spindel sind Schritt- oder AC-Motoren vorgesehen. Mit diesen Antrieben können die bekannten CNC-Steuerungen eingesetzt werden, die eine punktgenaue Bearbeitung des Werkstückes ermöglichen, wobei hier mit einer Werkzeugmaschine ohne Umspannen zu müssen, sowohl die Grob- als auch die Feinbearbeitung vorgenommen werden kann.

Schließlich ist aus der EP 0 808 688 A1 eine Fräsmaschine mit einer Werkzeugeinheit mit einem Basisteil, einem an diesem angeordneten schnelllaufenden Antrieb für ein Fräswerkzeug, insbesondere einem Schnellfrequenz-Motor, und einem an der Abtriebswelle des Antriebes angeordneten Spannfutter für das Fräswerkzeug bekannt. Die Werkzeugeinheit ist an einer auf- und abbeweglichen Halterung der Fräsmaschine, insbesondere die Werkzeugaufnahme der Spindel, ansetzbar und ist zugleich an einen an der Fräsmaschine vorgesehenen Anschluss mindestens für die Antriebsenergie, insbesondere ferner für Kühlwasser und/oder Druckluft, ankuppelbar. Um die Bearbeitungsmöglichkeiten an einer Fräsmaschine weiter zu steigern, ist die Werkzeugeinheit derart ausgestaltet, dass der Antrieb über ein mit der Spindel der Fräsmaschine gleichachsiges oder achsparalleles Drehlager in einem Winkel zur Achse des Drehlagers an dem Basisteil angebracht und durch einen Stellantrieb in dem Drehlager einstellbar ist, wobei ein flacher Abtriebszapfen nach unten heraustritt. Die erste Alternative gleichachsiges Drehlager weist den wesentlichen Nachteil einer Beschränkung im überstreichbaren Fahrbereich auf. Bei der zweiten Alternative mit dem der Spindel achsparallelen Drehlager ist der Antrieb derart exzentrisch zu dem Drehlager angeordnet, dass der Mittelpunkt der Rundung der Fräswerkzeugspitze auf der Spindelachse liegt. Hierzu ist an dem Abtriebszapfen exzentrisch ein senkrecht nach unten ragender Halter angebracht. Nur bei dieser Alternative bleiben die Einstellungen des Werkstückes in den beiden waagerechten Richtungen durch den Maschinentisch ungeschmälert und es muss kein Abstand des Fräswerkzeuges von der Achse kompensieren werden. Weiterhin ist von Nachteil, dass die aus der EP 0 808 688 A1 bekannte Fräsmaschine nur eine 4-Achsensteuerung ermöglicht und zum Nachrüsten handelsüblicher 3-achsgesteuerter Fräsmaschinen nicht ohne weiteres geeignet ist. Zudem muss der exzentrische Halter durch die Winkelstellung und Hebelwirkung hohe Kräfte auffangen, wobei der Winkelbereich zwischen 20° und 35° nicht überschritten werden kann und wobei bei längerem Betrieb die Maßgenauigkeit sich verschlechtert und letztendlich das Ergebnis der Feinbearbeitung nicht befriedigend ist.

Weiterhin sind aufwendige 5-achsgesteuerte Fräsmaschinen bekannt, die jedoch vergleichsweise teuer sind. Wie die vorstehende Würdigung des Standes der Technik aufzeigt, führt die Verschwenkbarkeit in der Regel zu einer Verlängerung in Richtung der Maschinenhauptachse, insbesondere der Hauptspindel. Dadurch entstehen Nachteile hinsichtlich Steifigkeit, Kühlung und Klemmung. Beispielsweise ist die Hilfsspindel beim Gegenstand der DE 94 18 723 U1 stets eine Störkante.

Der Erfindung liegt die Aufgabe zugrunde, eine Werkzeugmaschine derart auszugestalten, dass das Bearbeiten komplexer Werkstücke wie bei einer 5-achsgesteuerten Werkzeugmaschine durchführbar ist. Insbesondere soll mit einer Werkzeugmaschine sowohl das Schruppen als auch das Schlichten ermöglicht werden.

Diese Aufgabe wird, ausgehend von einer Werkzeugmaschine mit den Merkmalen im Oberbegriff des Patentanspruchs 1, dadurch gelöst, dass konzentrisch zur Maschinenhauptachse am Hauptspindelstock ein Dreh-Lagerbock und an diesem ein Dreh-Schwenkkopf für eine Hilfsspindel mit separatem Antrieb derart befestigt sind, dass deren Spindelachse um die Maschinenhauptachse dreh- und verschwenkbar gelagert ist, wodurch die Werkzeugmaschine eine fünfachsige Steuerung ermöglicht.

Gemäß Anspruch 1 ist die Werkzeugmaschine in Zweispindeltechnik ausgeführt, wobei die Hauptspindel zum Schruppen und die Hilfsspindel zum Schlichten vorgesehen ist und - im Gegensatz zur Werkzeugmaschine gemäß der DE 94 18 723 U1- die Hilfsspindel in die bereits schon vorhandene Hauptspindel eingefügt wird, was eine einfache Montage der Hilfsspindel möglich macht. Von Vorteil ist, dass die während des Betriebs an der Hilfsspindel auftretenden Kräfte über spielfreie Lager aufgefangen und zur Hauptspindel abgeleitet werden. Die Rüstzeit liegt bei der erfindungsgemäßen Werkzeugmaschine bei maximal 3 Minuten während diese bei herkömmlichen Werkzeugmaschinen zwischen 30 und 60 Minuten liegt. Da die beiden Spindeln einen gemeinsamen Bezugspunkt/Koordinatensystem aufweisen, ist bei einer CNC-Steuerung kein zusätzlicher Aufwand für die Justierung der Hilfsspindel notwendig ist. Von besonderem Vorteil ist, dass durch das Rastersystem im Dreh- und Schwenkbereich der Einsatz an den meisten CNC-CAD unterstützten Arbeitsplätzen möglich ist (weit über 90% aller Firmen arbeiten heute mit CNC/CAD-CAM). Somit muß in der Praxis der Nullpunkt nicht jedesmal neu aufgenommen werden, sondern die Verschwenkung erfolgt im Achsenkreuz. Auch bei einer manuellen Einstellung des erfindungsgemäßen Dreh-Schwenkkopfs wird eine hohe Präzision, wie bei wesentlich teueren 5-achsgesteuerten Fräsmaschinen erreicht. Weiterhin ist von Vorteil, dass ein Nachrüsten älterer Werkzeugmaschinen, z.B. 3-achsgesteuerte Fräsmaschine, und eine leichte und kosteneffektive Anpassung an unterschiedliche Hauptspindeln und Formate möglich ist. Insbesondere ist durch die geringe Bauhöhe und das geringe zusätzliche Gewicht, die Steifigkeit und ausreichende Kühlung der Spindeln gewährleistet und das Bearbeiten auch komplexer Werkstücke einschließlich Hinterschneidungen ist durch das Fünf-Achsensystem sichergestellt. Damit können zur Bearbeitung, ebenfalls wie bei 5-Achsgesteuerten Fräsmaschinen, kurze Werkzeuge eingesetzt werden, während beim Stand der Technik zur Bearbeitung in der Tiefe in der Regel ein langes Werkzeug erforderlich ist. In der Praxis liegt das Gesamtgewicht von Lagerbock, Dreh-Schwenkkopf und Hilfsspindel der erfindungsgemäßen Werkzeugmaschine je nach Typ zwischen 18 bis 25 kg, wobei der Einbau von Hand ohne Montagehilfen auch bei aufgespannten Werkstück möglich ist. Vergleichsweise liegt dieses Gewicht bei herkömmlichen Werkzeugmaschinen zwischen ca. 40 kg und 150 kg, was eine Montage von Hand nicht erlaubt, so dass ein Kran und/oder Montagehilfen erforderlich sind. Auch ist ein leichtes Reinigen möglich, da alle funktionswichtigen Teile von außen zugänglich sind und somit ein leichtes und einfaches Reinigen zulassen. Die Reinigung ist in der Praxis wichtig, da beispielsweise beim Fräsen oder Bohren Späne und Schmutz anfallen, die in bestimmten Bereichen zu Beschädigungen bzw. maßlichen Veränderungen-beispielsweise durch das Zusetzen von Nutenführungen - führen können.

Bei einer bevorzugten Ausgestaltung der Erfindung gemäß Patentanspruch 2, weist der Dreh-Lagerbock einen Klemmring und einen Zahnkranz auf, wobei der Klemmring am Umfang und zumindest in Teilbereichen eine Zahnung trägt und in Plananlage an der Stirnwand des Spindelgehäuses und dort konzentrisch zum Werkzeugaufnahmekegel der Hauptspindel befestigt ist und dass Klemmring und Zahnkranz nach Lösen von Verbindungsmitteln gegeneinander verdrehbar und die Arbeitsposition mittels eines am Umfang von Klemmring und Zahnkranz angeordneten Klemmstücks festlegbar ist.

Die Verwendung eines zweiteiligen Dreh-Lagerbocks bietet mehrere Vorteile. Einerseits weist der Werkzeugaufnahmekegel in der Regel an der Stirnseite eine Platte auf, so dass eine sichere Plananlage mit einfachen Befestigungsmitteln (beispielsweise Bolzenschrauben) ermöglicht wird. Die Aufnahme bzw. das Spannen im Hauptspindelantrieb kann bei der erfindungsgemäßen Werkzeugmaschine über handelsübliche Kegelaufnahmen, z.B. SK-50/SK-40 erfolgen, wobei erfindungsgemäß eine zusätzliche Zentrierung und Klemmung erfolgt. Bei herkömmlichen Werkzeugmaschinen erfolgt dagegen das Zentrieren nur über den Kegel, so dass sich die Zentrierung/Klemmung - insbesondere bei älteren Maschinen mit ausgeschlagenem Kegelrand - durch das häufige Aus- und Einwechseln verschlechtert. Das Verdrehen in die gewünschte Winkellage ist in der Praxis auf einfache Art und Weise und mit wenigen Handgriffen durchführbar, da lediglich die seitliche Klemmung gelöst werden muß_{,} während die Hauptspindel fest bleibt. Die Herstellung des Dreh-Lagerbocks erfordert keine speziellen und teuren Gußformen, sondern die Teile können CNC-gesteuert mit Hilfe eines Drehautomaten hergestellt werden, so daß nur geringe Herstellungskosten und Werkzeugkosten erforderlich sind. Dadurch wird auch eine schnelle und kosteneffektive Anpassung an unterschiedliche Formate möglich und der Dreh-Lagerbock wird auch für kleine und mittlere Serien rentabel. Des weiteren bietet diese Ausgestaltung Vorteile hinsichtlich CNC-Steuerung, da die Hauptspindel fest bleibt und somit keine Nullpunktjustierung erforderlich ist. Auch ist ein leichtes und einfaches Reinigen möglich, da für an der Stirnseite haftender Späne/Stäube höchstens nur ein Durchwischen der Zahnung erforderlich sein könnte.

In Weiterbildung der Erfindung weist, gemäß Patentanspruch 3, der Dreh-Lagerbock zwei Klemmringe aufweist, welche nach Lösen von Verbindungsmitteln für die Festlegung der Arbeitsposition gegeneinander verdrehbar sind und dass diese mittels auf den gegenüberliegenden Stirnseiten der Klemmringe befindlichen Rippen oder Verzahnung festlegbar sind.

Diese Weiterbildung der Erfindung weist den Vorteil auf, dass die Reinigung einfach durchführbar ist, da die Rippen oder Verzahnung zugänglich ist und nur ein gelegentliches Durchwischen erfordern. Beim Lösen der Hauptspindel kann die Zange/Greifer häufig um ca. 5 mm herausgefahren werden, so dass ein Absenken um 2 mm mehr als ausreichend bei der gewählten Zahnhöhe ist und das Verdrehen in die gewünschte Winkellage in der Praxis auf einfache Art und Weise und mit wenigen Handgriffen durchführbar ist. Auch kann der Ein- und Ausbau des erfindungsgemäßen Dreh-Schwenkkopfs durch Betätigen der bei herkömmlichen Werkzeugmaschinen vorgesehenen Taste "Werkzeugwechsel manual" erfolgen, so dass für den Einsteller/Maschinenführer keine Änderung in der Handhabung erforderlich ist; zudem besteht die Möglichkeit den erfindungsgemäßen Dreh-Schwenkkopf auch bei vollautomatischen Werkzeugmaschinen mit Werkzeugwechsler einzusetzen.

Bei einer bevorzugten Ausgestaltung der Erfindung, gemäß Patentanspruch 4, weist der Dreh-Schwenkkopf einen am Dreh-Lagerbock befestigbaren Träger auf, welcher eine Lagerschale beidseitig umgreift und für die Festlegung der Arbeitsposition weist die Lagerschale eine Aufnahme mit Klemmvorrichtung für eine Dreh-Lagerachse der Hilfsspindel und am Umfang zumindest in Teilbereichen eine Zahnung und/oder in Teilbereichen auf einem Kreisbogen angeordnete Vertiefungen oder Bohrungen für die Verschwenkung auf.

Diese Ausgestaltung der Erfindung weist den Vorteil auf, dass ein einfaches Ausrechnen der Werkzeuglänge durch den vorgebbaren Drehwinkel/Schwenkwinkel ermöglicht wird. Die Länge von der Morsekegelaufnahme bis zum Drehpunkt des Schwenkkopfs liegt bauartbedingt fest, ebenso vom Drehpunkt bis zur Planfläche des Schwenkkopfs, so dass über den bekannten Winkel die Maßverschiebung berechnet bzw. das Werkzeug bei der Programmierung der erfindungsgemäßen Werkzeugmaschine vermessen werden kann. Vorzugsweise wird der Schwenkkopf in einem festen Rastermaß von jeweils 5° gedreht.

In Weiterbildung der Erfindung besteht, gemäß Patentanspruch 5, die Klemmvorrichtung aus einer Schraube, deren Schraubenachse senkrecht zu einer Hinterschneidung der Lagerachse verläuft.

Diese Weiterbildung der Erfindung weist den Vorteil auf, dass die Anschlußkabel und Versorgungsleitungen der Hilfsspindel, welche bei der Werkstückbearbeitung möglicherweise stören könnten, einfach nach Lösen der Klemmung stufenlos verdreht werden können, bis diese nicht mehr stören. Der erfindungsgemäße Dreh-Schwenkkopf kann deshalb mit fast allen gängigen Hochgeschwindigkeitsmotoren nachgerüstet werden.

Vorzugsweise ist gemäß Patentanspruch 8 vorgesehen, dass der Klemmring und Zahnkranz oder die zwei Klemmringe mindestens durch eine federbelastete Bolzen-Schraubverbindung miteinander lösbar verbunden werden.

Durch diese Bolzen-Schraubverbindung wird erreicht, dass bei einem Lösen der Hauptspindel der erfindungsgemäße Dreh-Schwenkkopf nicht herausfallen kann und dennoch ein Verdrehen gewährleistet ist, da durch die Federkraft ein entsprechendes Ausrücken bewirkt wird.

Weitere Vorteile und Einzelheiten lassen sich der nachfolgenden Beschreibung von in der Zeichnung dargestellten bevorzugten Ausführungsformen der Erfindung entnehmen. In der Zeichnung zeigt:
- FIG. 1: eine erste Ausführungsform der erfindungsgemäßen Werkzeugmaschine in Explosionsdarstellung und in der Seitenansicht und
- FIG. 2a: zwei verschiedene Ausgestaltungen des Dreh-Lagerbocks in der Seitenansicht, teilweise im Schnitt,
- FIG. 2b: die Draufsicht auf den Dreh-Lagerbock gemäß FIG. 2a,
- FIG. 3a: den Träger des Dreh-Schwenkkopfs in der Seitenansicht, teilweise im Schnitt,
- FIG. 3b: zwei verschiedene Ausgestaltungen der Lagerschale des Dreh-Schwenkkopfs in der Seitenansicht, teilweise im Schnitt,
- FIG. 4: eine Seitenansicht der ersten Ausführungsform gemäß FIG. 1 und
- FIG. 5: eine Seitenansicht einer zweiten Ausführungsform der erfindungsgemäßen Werkzeugmaschine, teilweise im Schnitt.

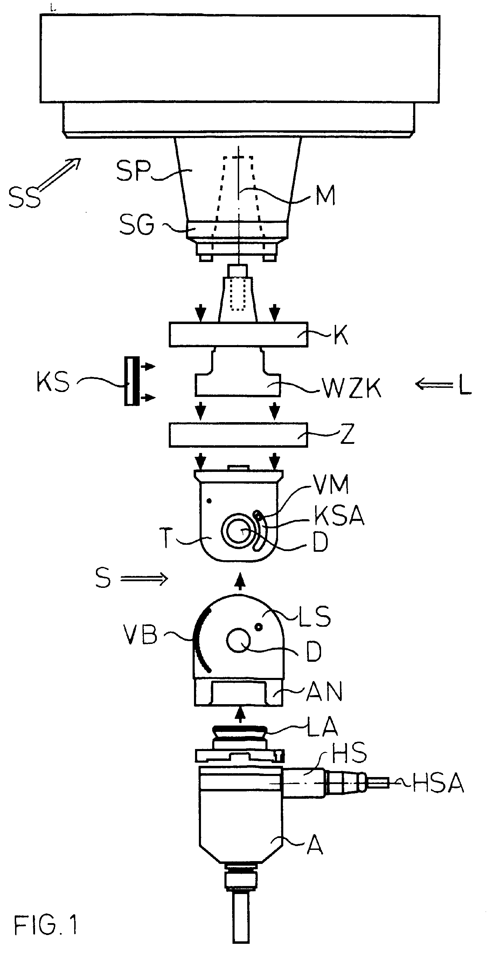

Die FIG. 1 bis FIG. 5 zeigen Ausführungsformen der erfindungsgemäßen Werkzeugmaschine, insbesondere für die Ausgestaltung als Fräsmaschine. Die Erfindung kann jedoch bei allen Werkzeugmaschinen zum Aufrüsten um zwei weitere Achsen eingesetzt werden.

Die Erfindung geht aus von einer handelsüblichen 3-achsgesteuerten Werkzeugmaschine, bestehend aus einem Gestell, einem Hauptantrieb und einem Vorschubantrieb für eine Hauptspindel SP, welche in einem Spindelstock SS gelagert ist (siehe im einzelnen FIG. 1). Weiterhin ist ein Maschinentisch zum Aufspannen des Werkstücks und ein Schlitten zur Verstellung des Maschinentisches vorgesehen. Bei der erfindungsgemäßen Werkzeugmaschine sind konzentrisch zur Maschinenhauptachse M am Hauptspindelstock SS ein Dreh-Lagerbock L und an diesem ein Dreh-Schwenkkopf S für eine Hilfsspindel HS mit separatem Antrieb A derart befestigt, dass deren Spindelachse HSA um die Maschinenhauptachse M dreh- und verschwenkbar gelagert ist, wodurch die Werkzeugmaschine eine fünfachsige Steuerung ermöglicht. Dabei ist das Koordinatensystem der Hilfsspindel HS (Dreh- und Schwenkbewegung) spielfrei zum Koordinatensystem der Hauptspindel SP festgelegt.

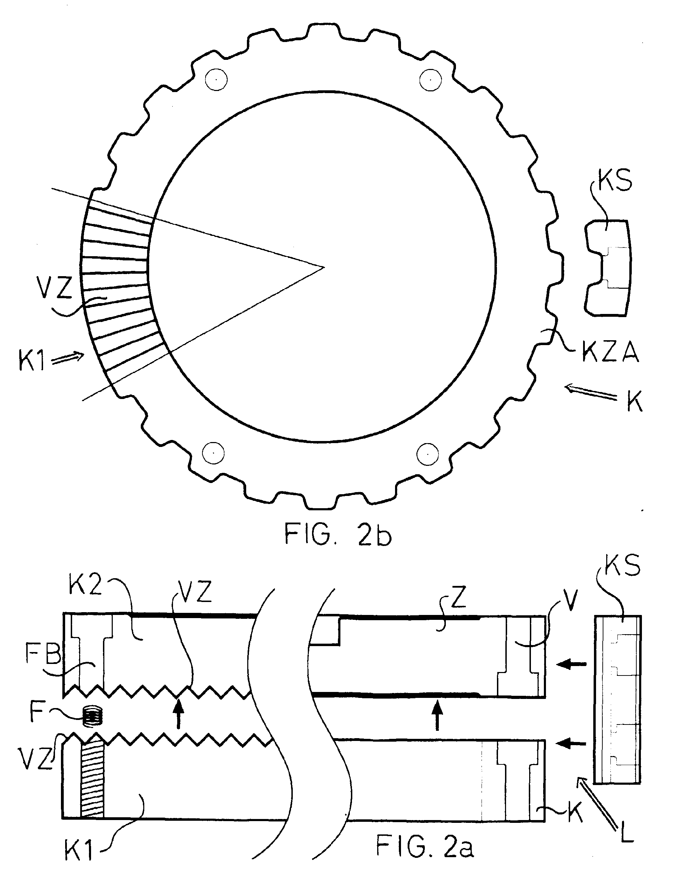

Der Dreh-Lagerbock L weist bei einer ersten Ausführungsform einen Klemmring K und einen Zahnkranz Z auf (siehe FIG. 2a und FIG. 2b), wobei der Klemmring K am Umfang und zumindest in Teilbereichen eine Zahnung KZA trägt und in Plananlage an der Stirnwand des Spindelgehäuses SG und dort konzentrisch zum Werkzeugaufnahmekegel WZK der Hauptspindel SP befestigt ist. Die Zentrierung kann beispielsweise mittels konzentrisch angeordneten Schraubbolzen erfolgen. Der Klemmring K und der Zahnkranz Z sind nach Lösen von Verbindungsmitteln V, vorzugsweise Schraubbolzen, gegeneinander verdrehbar, wobei die Arbeitsposition mittels eines am Umfang von Klemmring K und Zahnkranz Z angeordneten Klemmstücks KS festlegbar ist. In der Praxis ist eine Teilung von 15° ausreichend, wobei diese seitliche Klemmung eine einfache Handhabung erlaubt und kurze Rüst- bzw. Einstellzeiten ermöglicht.

Bei einer zweiten Ausführungsform ist vorgesehen, dass der Dreh-Lagerbock L zwei Klemmringe Kl, K2 aufweist (siehe FIG. 2a und 2b), welche nach Lösen von Verbindungsmitteln V, vorzugsweise Schraubbolzen, für die Festlegung der Arbeitsposition gegeneinander verdrehbar sind. Im einzelnen sind diese mittels auf den gegenüberliegenden Stirnseiten der Klemmringe K1, K2 befindlichen Rippen oder Verzahnung VZ festlegbar. Auch diese Ausführungsform erlaubt in der Praxis eine einfache Handhabung und ermöglicht kurze Rüst- bzw. Einstellzeiten. Vorzugsweise bei der Ausgestaltung mit zwei Klemmringe Kl, K2 sind diese mindestens durch eine federbelastete Bolzen-Schraubverbindung F, FB miteinander lösbar verbunden. Hierbei kann beispielsweise eine in einer Aussparung von Klemmring K1 angeordnete Kontermutter vorgesehen werden, wodurch die beiden Klemmringe Kl, K2 leicht um die Zahnhöhe (z.B. 2 mm) auseinandergezogen werden können.

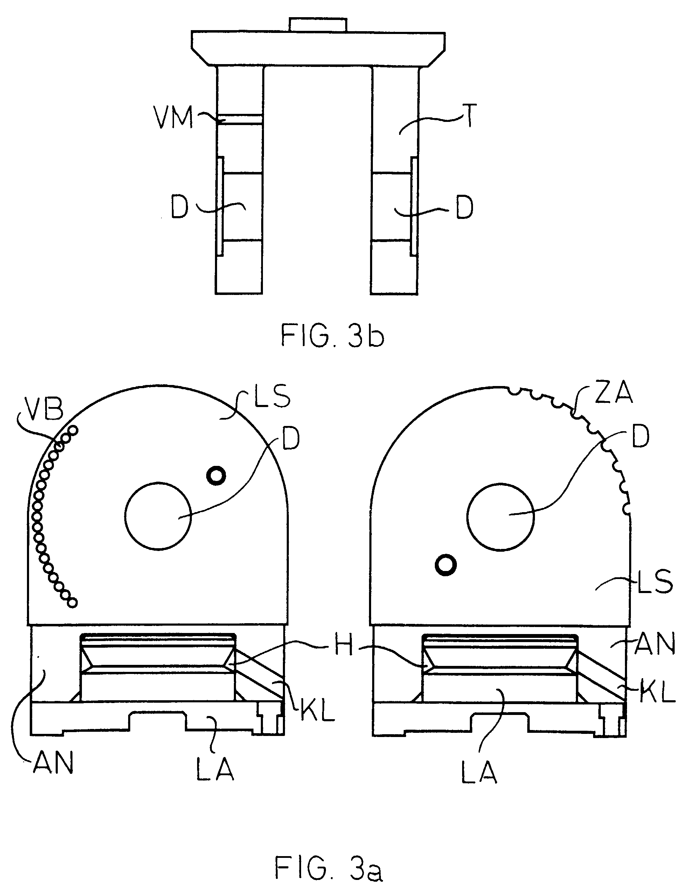

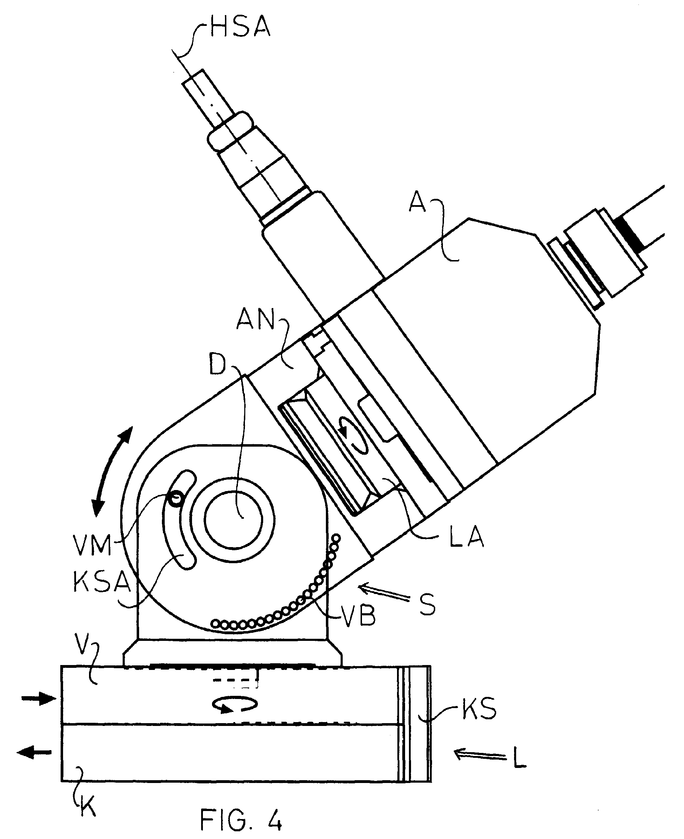

Im einzelnen ist vorgesehen, dass der Dreh-Schwenkkopf S einen am Lagerbock L befestigbaren Träger T aufweist, welcher eine Lagerschale LS beidseitig umgreift (siehe FIG. 3a und FIG. 3b). Die Lagerschale LS weist für die Festlegung der Arbeitsposition eine Aufnahme AN mit Klemmvorrichtung KL für eine Lagerachse LA der Hilfsspindel HS auf. Weiterhin sind am Umfang, zumindest in Teilbereichen, eine Zahnung ZA und/oder in Teilbereichen auf einem Kreisbogen angeordnete Vertiefungen VB oder Bohrungen vorgesehen. Dabei wird durch die zwei gegenüberliegenden Klemmstellen (nämlich in der Lagerschale LS und der Kreissegmentaussparung KSA; siehe FIG. 4) auf einfache Art und Weise eine Zentrierung ermöglicht.

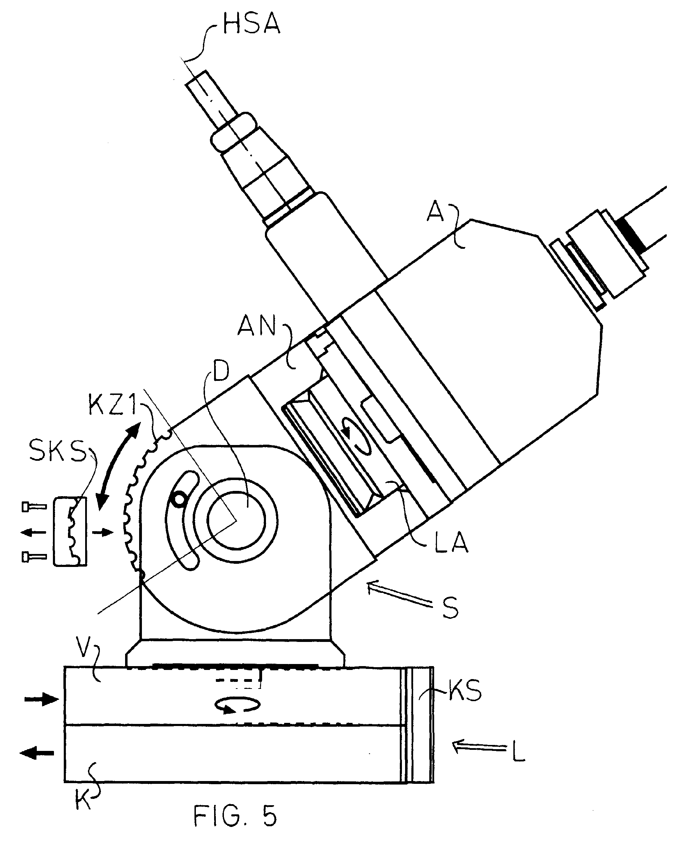

Zur Grobjustierung zwischen Lagerschale LS und Träger T ist im Träger T eine Kreissegmentaussparung KSA vorgesehen, in welcher kraft- und/oder formschlüssige Verbindungsmittel VM geführt werden. Vorzugsweise ist für die Feinjustierung ein 5°-Grad Raster vorgesehen, wobei die Fixierung in dieser Lage beispielsweise mittels Stifte erfolgen kann, welche in die Vertiefungen VB gesteckt werden (siehe FIG. 4). Bei einer zweiten Ausgestaltung wird die Feinjustierung mittels einer seitlich, insbesondere am Umfang, angeordneten Klemmung SKS, welche in eine Zahnung ZA (siehe FIG. 3a) oder Zahnung KZ1 (siehe FIG. 5) des Dreh-Schwenkkopfs S oder der Lagerschale LS eingreift, realisiert. In der Praxis reicht bei einer Fräsmaschine mit Kugelfräser diese Rasterung aus, um auch komplizierte Werkstückformen herstellen zu können Die Klemmvorrichtung KL selbst, welche eine Verdrehung der Hilfsspindel HS in der Aufnahme AN um die Lagerachse LA ermöglicht, kann vorzugsweise aus einer form-kraftschlüssigen Verbindung bestehen, beispielsweise einer Schraube, deren Schraubenachse senkrecht zu einer Hinterschneidung H der Lagerachse LA verläuft. Der Winkel der Schraubenachse beträgt vorzugsweise ca. 30°, wodurch eine niedrige Bauhöhe realisiert werden kann

Weiterhin weisen der Träger T und Lagerschale LS eine korrespondierende Durchsteckaufnahme D für einen Bolzen zur drehbaren Lagerung der Lagerschale LS auf. Durch den Rotationsbolzen für die B-Achse wird ein Präzisionsschwenkpunkt mit spielfreier Passung realisiert, welcher oberflächenbehandelt (Oberflächenhärtung) und beschichtet (gleichzeitig Schmierung) ist, beispielsweise Titanaluminiumnitrid, so dass jede Schwingung, welche das Fräsbild verschlechtert zuverlässig vermieden wird. Wie umfangreiche Untersuchungen ergeben haben, erzeugen bei einem 100 mm langen Schlichtfräser und 30T Umdrehungen/min der Hilfsspindel HS ein Gramm Unwucht eine axiale Belastung von 30 kg.

Die erfindungsgemäße Werkzeugmaschine weist den Vorteil der vielfältigen Einsatzmöglichkeit auf, wobei der Dreh-Schwenkkopf auch zum nachträglichen Aufrüsten in bestehende 3-achsige Werkzeugmaschinen geeignet ist und wobei die Möglichkeit besteht die vierte und fünfte Achse manuell zu bedienen. Durch die kombinierte Dreh-Schwenkbewegung ist die Bearbeitung beliebig komplizierter Werkstücke, einschließlich von Hinterschneidungen, mit einem kurzen Werkzeug (Fräser) und ohne Umspannen zu müssen, möglich. Weitere Vorteile sind im Vergleich zum bekannten Stand der Technik die Erweiterung des überstreichbaren Fahrbereichs ohne Änderung des Maschinentisches, die spielfreie Positionierung und Verschwenkung der eingesetzten Werkzeuge, die wesentlich geringere Rüstzeit, die niedrige Bauhöhe und das geringere Gewicht, die Bearbeitungsmöglichkeit auch komplexer Werkstückformen, die einfache Einbindung in Bearbeitungsstraßen mit programmgesteuerten Werkzeugmaschinen und die einfache Reinigungsmöglichkeit.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise kann eine Klemmvorrichtung vorgesehen werden, welche ein zweiteiliges Schwenklager für die Verschwenkung in einer Vertikalebene aufweist; zur Klemmung im Dreh-Lagerbock können Feder/Rastverbindungen vorgesehen werden, welche ein stufenweise Verdrehen zwischen den einzelnen Rastlagen erlauben; zur drehbaren Lagerung der Lagerschale kann eine Bolzen-Schraubverbindung vorgesehen werden, wodurch diese gleichzeitig zum Zentrieren und Spannen dient; die Verschwenkung um die Bolzenachse der Lagerschale und/oder die Verdrehung um die Lagerachse sowie das Verdrehen im Lagerbock kann auch vollautomatisch erfolgen, wobei beispielweise CNC-gesteuerte Schrittmotorren und Positionsdetektoren eingesetzt werden, so dass sich ein wesentlich erweiterter Arbeitsbereich - im Vergleich zum Stand der Technik wie beispielsweise der DE 296 23 469 U1 - ergibt usw.

## Patentansprüche

1. Werkzeugmaschine, bestehend aus einem Gestell, einem Hauptantrieb und einem Vorschubantrieb für eine Hauptspindel (SP), welche in einem Spindelstock (SS) gelagert ist, einem Maschinentisch zum Aufspannen des Werkstücks sowie einem Schlitten zur Verstellung des Maschinentisches und einem mit der Hauptspindel (SP) gleichachsigen Drehlager, welches eine im Winkel zur Achse des Drehlagers verstellbare Hilfsspindel (HS) trägt, **dadurch gekennzeichnet**, dass konzentrisch zur Maschinenhauptachse (M) am Hauptspindelstock (SS) ein Dreh-Lagerbock (L) und an diesem ein Dreh-Schwenkkopf (S) für eine Hilfsspindel (HS) mit separatem Antrieb (A) derart befestigt sind, dass deren Spindelachse (HSA) um die Maschinenhauptachse (M) dreh- und verschwenkbar gelagert ist, wodurch die Werkzeugmaschine eine fünfachsige Steuerung ermöglicht.

2. Werkzeugmaschine nach Anspruch 1, **dadurch gekennzeichnet**, dass der Dreh-Lagerbock (L) einen Klemmring (K) und einen Zahnkranz (Z) aufweist, wobei der Klemmring (K) am Umfang und zumindest in Teilbereichen eine Zahnung (KZA) trägt und in Plananlage an der Stirnwand des Spindelgehäuses (SG) und dort konzentrisch zum Werkzeugaufnahmekegel (WZK) der Hauptspindel (SP) befestigt ist und dass Klemmring (K) und Zahnkranz (Z) nach Lösen von Verbindungsmitteln (V) gegeneinander verdrehbar und die Arbeitsposition mittels eines am Umfang von Klemmring (K) und Zahnkranz (Z) angeordneten Klemmstücks (KS) festlegbar ist.

3. Werkzeugmaschine nach Anspruch 2, **dadurch gekennzeichnet**, dass der Dreh-Lagerbock (L) zwei Klemmringe (Kl, K2) aufweist, welche nach Lösen von Verbindungsmitteln (V) für die Festlegung der Arbeitsposition gegeneinander verdrehbar sind und dass diese mittels auf den gegenüberliegenden Stirnseiten der Klemmringe (Kl, K2) befindlichen Rippen oder Verzahnung (VZ) festlegbar sind.

4. Werkzeugmaschine nach Anspruch 1, **dadurch gekennzeichnet**, dass der Dreh-Schwenkkopf (S) einen am Dreh-Lagerbock (L) befestigbaren Träger (T) aufweist, welcher eine Lagerschale (LS) beidseitig umgreift und dass für die Festlegung der Arbeitsposition die Lagerschale (LS) eine Aufnahme (AN) mit Klemmvorrichtung (KL) für eine Dreh-Lagerachse (LA) der Hilfsspindel (HS) und am Umfang zumindest in Teilbereichen eine Zahnung (ZA) und/oder in Teilbereichen auf einem Kreisbogen angeordnete Vertiefungen (VB) oder Bohrungen für die Verschwenkung aufweist.

5. Werkzeugmaschine nach Anspruch 4, **dadurch gekennzeichnet**, dass die Klemmvorrichtung (KL) aus einer Schraube besteht, deren Schraubenachse senkrecht zu einer Hinterschneidung (H) der Lagerachse (LA) verläuft.

6. Werkzeugmaschine nach Anspruch 4, **dadurch gekennzeichnet**, dass Träger (T) und Lagerschale (LS) eine korrespondierende Durchsteckaufnahme D) für einen Bolzen zur drehbaren Lagerung der Lagerschale (LS) aufweist.

7. Werkzeugmaschine nach Anspruch 4, **dadurch gekennzeichnet**, dass zur Grobjustierung zwischen Lagerschale (LS) und Träger (T), im Träger (T) eine Kreissegmentaussparung (KSA) vorgesehen ist, in welcher kraftund/oder formschlüssige Verbindungsmittel (VM) geführt werden.

8. Werkzeugmaschine nach Anspruch 2 oder 3, **dadurch gekennzeichnet**, dass Klemmring (K) und Zahnkranz (Z) oder die zwei Klemmringe (Kl, K2) mindestens durch eine federbelastete Bolzen-Schraubverbindung (F, FB) miteinander lösbar verbunden werden.

9. Werkzeugmaschine nach Anspruch 4, **dadurch gekennzeichnet**, dass der Dreh-Schwenkkopf (S) oder die Lagerschale (LS) seitlich oder am Umfang eine Zahnung (ZA, siehe FIG. 3a oder Zahnung KZ1, siehe FIG. 5) aufweist, in welche eine Klemmung (SKS) eingreift.
